# EUROPEAN PATENT SPECIFICATION

(11) **EP 1 157 778 B1**
(45) Date of publication and mention of the grant of the patent: **27.10.2004**
(21) Application number: 01304516.6
(22) Date of filing: 23.05.2001
(51) Int. Cl.: B23Q 3/00, B27B 27/08, B27B 27/10

(54) **System for coupling a control device to the guide fence of a saw table**
System zur Kupplung einer Steuereinrichtung und der Führungsschiene eines Sägetisches
Dispositif d'accouplement d'un dispositif de commande et le guide d'une table de sciage

(30) Priority: 24.05.2000 US 578806
(43) Date of publication of application: 28.11.2001
(73) Proprietor: Precision Automation, Inc., Vancouver, Washington 98682 (US)
(72) Inventor: Dick, Spencer B., c/o Precision Automation Inc., Vancouver, Washington 98682 (US)
(74) Representative: Harrison Goddard Foote

(56) References cited:
- EP-A- 1 052 073
- US-A- 5 524 514

## Description

### Field of the Invention

The invention relates to saws. In particular, the invention involves an after-market accessory for mounting a digital fence positioning system on a table saw, according to the preamble of claim 1 (see, for example, US-5524514-A).

### Background of the Invention

Table saws are often equipped with a moveable fence to allow the operator to set desired cut dimensions. Table saw fences typically are moveable along a guide rail that is bolted along one side of the table saw. An operator can slide the fence back and forth along the guide rail and then lock the fence in place by means of a locking handle. Many such table saws are sold in a design that requires manual adjustment of the fence.

Sometimes it is desirable to use a table saw in an automated or semi-automated capacity. Digital positioning systems are available for adding onto a table saw that has a manually operable fence. After market automated fence positioning systems may be cumbersome to install. Some positioning systems require replacement of the fence and the rail. Such an overhaul procedure is time consuming and may require a relatively high level of mechanical skill.

Another type of automated fence positioning system is designed for mounting on a preexisting rail, and for use with the preexisting fence and positioning clamp. This approach requires the purchaser to bolt the positioning system to the table via brackets. Mounting of the positioning system on the saw can be challenging because it is critical that the positioner guide rail be aligned precisely in parallel with the preexisting fence rail. It can be difficult and time consuming to achieve proper alignment of the positioning guide and the fence rail.

Another problem with prior automated fence positioning systems is that different table saws have different table and bolt configurations so that one bracket design may not be universally functional to mount the system on different saw configurations.

### Summary of the Invention

The invention provides a system for adding an automated fence positioning system to a preexisting table saw. The fence positioning system operates with a preexisting fence and associated first guide rail for directing movement of the fence.

According to a first aspect of the invention which is defined in claim 1, there is provided a control device for operating a fence on a table saw having a first rail that guides movement of a fence , comprising a fence controller having a fence positioner connected to the fence and a second rail that guides movement of the positioner and a clamp device joining the second rail directly to opposite ends of the first rail.

Preferably, the clamp device is removable and preferably it holds the second guide rail in parallel with the first rail without interfering with a functional range of movement of the fence back and forth along the first rail. In one embodiment the clamp device connects the second rail directly to the first rail.

Preferably, the clamp device has at least two clamps designed to be fastened at opposite ends of the first rail. The clamping device preferably extends diagonally downward from the first rail

Preferably, the fence controller comprises a drive mechanism connected to the fence for automatically moving the fence along the first rail, wherein the drive mechanism includes the fence positioner. Preferably, the drive mechanism includes a computer and a keypad for inputting information into the computer for determining the dimension of wood to be cut on the table saw. In one embodiment, the drive mechanism has a processor that determines where to move the fence based on information input through the keypad and more preferably the processor is capable of memorizing one or more cut lists and/or is capable of optimizing a cut routine based on a desired cut list entered and information concerning available raw materials. Preferably, the processor determines where to move the fence based on information input through the keypad and preferably the processor is capable of memorizing common cut lengths and carrying out movement of the fence to a preprogrammed position in response to manual contact of a single key on the keypad.

Preferably, the second rail is in the form of a rectangular tube having a linear channel and preferably it has a top side, the clamp device being rigidly connected to the top side of the second rail.

In one embodiment the invention comprises a table saw and a fence control device as hereinbefore described.

The present invention can provide an automated fence positioning system comprising clamp devices with releasable fastening means that are easy to mount and optionally demount from a table saw or the like. The invention thus further includes a clamp on system which is particularly advantageous in that it facilitates use and may be used with a variety of different saw configurations.

A typical positioning system includes a controller mounted in a fixed position on a separate positioner guide rail or channeling member, and a fence mover or positioner that is connected to the fence. The positioner moves along the positioner guide rail, and is operated by the controller. The positioner guide rail is directly clamped to opposing ends of the preexisting fence rail. The direct clamping mechanism allows the rails to be aligned easily in a parallel relationship so that the fence positioning system functions properly.

### Description of the Figures

Figure 1 is a perspective view of a table saw with an after-market automated fence positioning system.
Figure 2 is a perspective view of a table saw with the positioner guide rail for the fence mover clamped directly to the preexisting fence rail, in accordance with a preferred embodiment of the invention.
Figure 3 is a side view of the table saw shown in Figure 2.
Figure 4 is a close-up of the clamp and rail portions of the saw shown in Figures 1 and 2.

### Description of the Invention

The invention provides a simplified system for adding an automated fence positioning system to a preexisting table saw. In particular, the invention allows a person to mount a digital fence positioning device to a table saw without dismantling the table saw, and without encountering significant difficulties aligning the fence positioner with the preexisting fence rail. The invention enables a person having less mechanical skill then was previously required, to install a fence positioning device.

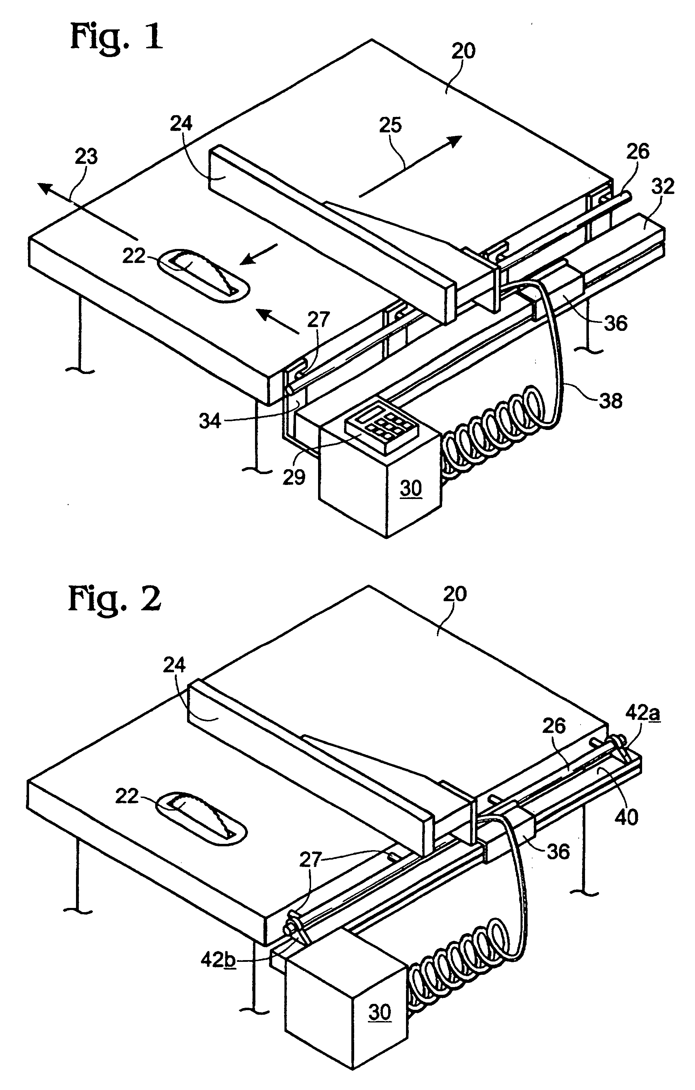

Figure 1 shows a table saw and automated fence-positioning device. Figures 2-4 show details of an improved mechanism for mounting an automated fence-positioning device on a table saw. In particular, Figures 2-4 show a pair of clamps that directly join the fence controller device to the preexisting rail for the fence.

In Figure 1, table 20 employs circular saw 22 to cut wood, plastic, metal, composite, or other material in direction 23. Fence 24 is moveable back and forth in direction 25 along fence rail 26. Fence rail 26 is connected to table 20 by cross supports 27. An accessory device is added to table saw 20 to control automatically the position of fence 24 in direction 25, thus determining a dimension to cut lumber. The fence controller 29 may include a computer and a keyboard mounted on or near table 20. A drive motor and amplifier are contained in housing 30 which is connected in a fixed location to positioner guide rail 32. Positioner guide rail 32 is connected to table 20 via brackets 34 that mount on to cross supports 27. Fence positioner 36 is connected to the drive motor via cable 38. Fence positioner 36 is rigidly connected to fence 24, and is moveable, per instruction from controller 30, along positioner guide rail 32.

Figure 2 shows a preferred embodiment of the invention in which many of the elements of table saw 20 are the same as shown in Figure 1. In Figure 2 positioner guide rail 40 is connected directly to fence rail 26 via clamps 42a and 42b. Importantly, clamps 42a and 42b are connected to fence rail 26 at extreme opposite ends of fence rail 26 so as not to interfere with the functioning movement of fence 24 in normal operation.

As shown in Figures 2-4, clamps 42a and 42b are configured to extend in a downwardly diagonal orientation so that the fence controller device is ultimately positioned outward and down slightly from table 20 and fence rail 26.

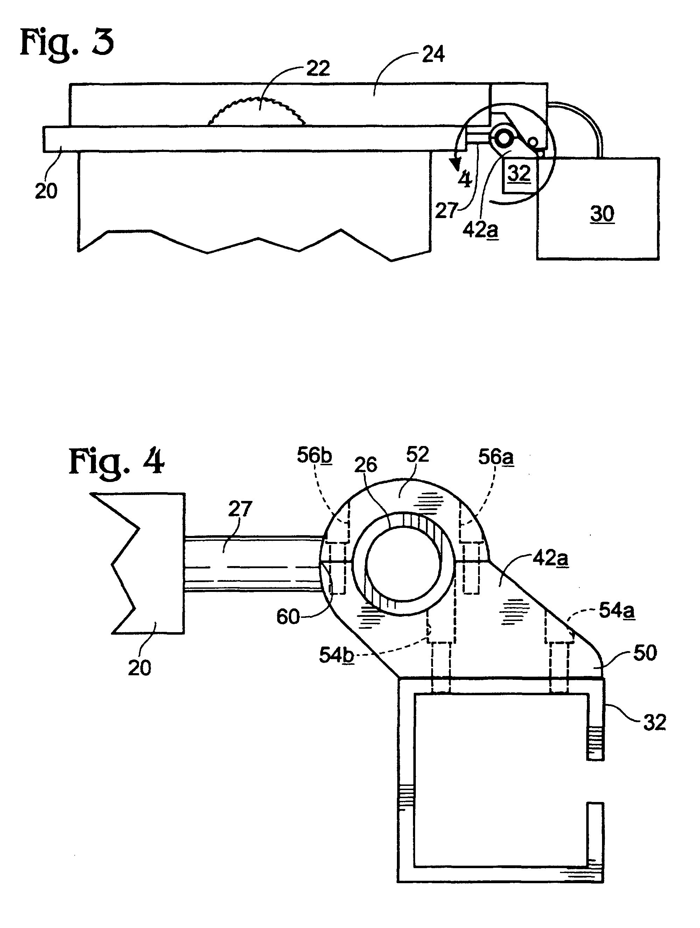

Figure 3 shows a side view of the table in Figure 2. Figure 4 shows a portion of Figure 3 expanded to focus on clamp 42a for connecting positioner guide rail 32 directly to fence rail 26. Clamp 42a has lower portion 50 that is bolted to upper portion 52. Bolt holes are shown in dashed lines. Specifically, bolt holes 54a and 54b are provided for coupling lower portion 50 of clamp 42a to positioner guide rail 32. Bolt holes 56a and 56b are provided for coupling upper portion 52 of clamp 42a to lower portion 50. When the digital fence controller device is properly installed, interface line 60 between upper portion 52 and lower portion 50 of clamp 42a is substantially horizontal or parallel to the surface of table 20.

Clamps 42a and 42b allow a person having minimal mechanical skill easily to mount a digital fence controlling system without dismantling preexisting hardware. Precise alignment of the positioner guide rail in parallel with the fence rail is achieved simply by bolting the clamps The following claims define certain combinations and subcombinations of features, functions, elements, and/or properties that are regarded as novel and nonobvious. Other combinations and subcombinations may be claimed through amendment of the present claims or presentation of new claims in this or a related application.

The Invention is defined in claim 1, and prefered embodiments are defined in the dependent claims.

## Claims

1. A control device for operating a fence on a table saw (20), said table saw having a first rail (26) that guides movement of a fence (24), comprising
a fence controller (29) having a fence positioner (36) connected to the fence (24) and **characterized in that** it comprises further a second rail (32, 40) that guides movement of the positioner (36), and
a clamp device (27, 34, 42a, 42b) joining the second rail directly to opposite ends of the first rail (26).

2. The device of claim 1 wherein the clamp device (42a, 42b) is removable.

3. The control device of either preceding claim wherein the fence controller comprises a drive mechanism (29, 30, 36, 38) connected to the fence (24) for automatically moving the fence along the first rail (26), wherein the drive mechanism includes the fence positioner (36).

4. The device according to any preceding claim, wherein the clamp device holds the second guide rail (32, 40) in parallel with the first rail (26) without interfering with a functional range of movement of the fence (24) back and forth along the first rail (26).

5. The device according to any preceding claim, wherein the clamp device (42a, 42b) connects the second rail (32, 40) directly to the first rail (26).

6. The device according to any preceding claim, wherein the clamp device has at least two clamps (42a, 42b) designed to be fastened at opposite ends of the first rail (26).

7. The device according to any preceding claim, wherein the clamping device extends diagonally downward from the first rail.

8. The device according to any preceding claim, wherein the second rail (32, 40) is in the form of a rectangular tube having a linear channel.

9. The device according to any preceding claim, wherein the second rail (32, 40) has a top side, the clamp device being rigidly connected to the top side of the second rail.

10. The device according to any preceding claim, wherein the drive mechanism includes a computer and a keypad for inputting information into the computer for determining the dimension of wood to be cut on the table saw.

11. The device of claim 10, wherein the drive mechanism has a processor (29) that determines where to move the fence based on information input through the keypad.

12. The device of claim 11, wherein the processor is capable of memorizing one or more cut lists and/or is capable of optimizing a cut routine based on a desired cut list entered and information concerning available raw materials.

13. The device of either claim 11 or claim 12, wherein the processor is capable of memorizing common cut lengths and carrying out movement of the fence to a preprogrammed position in response to manual contact of a single key on the keypad.

14. A table saw (20) comprising a fence control device according to any preceding claim.

## Patentansprüche

1. Eine Steuereinrichtung zum Verstellen eines Anschlags auf einer Tischkreissäge (20), wobei die besagte Tischkreissäge eine erste Leiste (26) aufweist, welche die Bewegung eines Anschlags (24) steuert, dabei weiter umfassend,
ein Anschlagsteuergerät (29), das einen Anschlagspositionierer (36) aufweist, der mit dem Anschlag (24) verbunden ist und **dadurch gekennzeichnet ist, dass** er außerdem eine zweite Leiste (32, 40) umfasst, die die Bewegung des Positionierers (36) steuert, und
eine Klemmvorrichtung (27, 34, 42a, 42b), durch die die zweite Leiste direkt mit den gegenüberliegenden Enden der ersten Leiste (26) zusammengehalten wird.

2. Die Einrichtung aus Anspruch 1, wobei die Klemmvorrichtung (42a, 42b) abnehmbar ist.

3. Die Steuereinrichtung der beiden vorhergehenden Ansprüche, wobei das Anschlagsteuergerät einen Antriebsmechanismus (29, 30, 36, 38) umfasst, der mit dem Anschlag (24) verbunden ist, um den Anschlag automatisch entlang der ersten Leiste (26) zu bewegen, wobei der Antriebsmechanismus den Anschlagspositionierer (36) beinhaltet.

4. Die Einrichtung gemäß den vorhergehenden Ansprüchen, wobei die Klemmvorrichtung die zweite Führungsleiste (32, 40) parallel zur ersten Leiste (26) hält, ohne den funktionalen Bewegungsbereich des Anschlags (24) vor und zurück entlang der ersten Leiste (26) zu beeinträchtigen.

5. Die Einrichtung gemäß den vorhergehenden Ansprüchen, wobei die Klemmvorrichtung (42a, 42b) die zweite Leiste (32, 40) direkt mit der ersten Leiste (26) verbindet.

6. Die Einrichtung gemäß den vorhergehenden Ansprüchen, wobei die Klemmvorrichtung mindestens zwei Klemmen (42a, 42b) aufweist, die so gebaut sind, dass sie an den gegenüberliegenden Enden der ersten Leiste (26) befestigt werden können.

7. Die Einrichtung gemäß den vorhergehenden Ansprüchen, wobei sich die Klemmvorrichtung von der ersten Leiste diagonal nach unten erstreckt.

8. Die Einrichtung gemäß den vorhergehenden Ansprüchen, wobei die zweite Leiste (32, 40) die Form eines mit einem linearen Schlitz versehenden Vierkantrohrs annimmt.

9. Die Einrichtung gemäß den vorhergehenden Ansprüchen, wobei die zweite Leiste (32, 40) eine Oberseite aufweist und die Klemmvorrichtung starr mit der Oberseite der zweiten Leiste verbunden ist.

10. Die Einrichtung gemäß den vorhergehenden Ansprüchen, wobei der Antriebsmechanismus einen Computer und eine Tastatur beinhaltet, über die Informationen in den Computer eingegeben werden können, mithilfe derer die Dimensionen des mit der Tischkreissäge zu schneidenden Holzes bestimmt werden können.

11. Die Einrichtung aus Anspruch 10, wobei der Antriebsmechanismus einen Prozessor (29) aufweist, der auf Basis der über die Tastatur eingegebenen Informationen bestimmt, wohin der Anschlag bewegt werden muss.

12. Die Einrichtung aus Anspruch 11, wobei der Prozessor in der Lage ist, eine oder mehrere Schneidelisten zu speichern und/oder in der Lage ist, eine Schneideroutine zu optimieren, die auf einer eingegebenen gewünschten Schneideliste und Informationen bezüglich des vorhandenen Rohmaterials basiert.

13. Die Einrichtung aus Anspruch 11 oder Anspruch 12, wobei der Prozessor in der Lage ist, gängige Schnittlängen zu speichern und die Bewegung des Anschlags in eine vorprogrammierte Position als Reaktion auf die manuelle Betätigung einer einzelnen Taste auf der Tastatur durchzuführen.

14. Eine Tischkreissäge (20), die eine Anschlagssteuereinrichtung gemäß allen vorhergehenden Ansprüchen umfasst.

## Revendications

1. Dispositif de commande pour actionner un guide sur une scie circulaire à table (20), ladite scie circulaire à table possédant un premier rail (26) qui guide le mouvement d'un guide (24), comprenant :
un contrôleur de guide (29) possédant un dispositif de positionnement de guide (36) qui est connecté au guide (24) et **caractérisé en ce qu'**il comprend en outre un deuxième rail (32, 40) qui guide le mouvement du dispositif de positionnement (36), et
un dispositif de serrage (27, 34, 42a, 42b) qui raccorde directement le deuxième rail aux extrémités opposées du premier rail (26).

2. . Le dispositif de la revendication 1 dans lequel le dispositif de serrage (42a, 42b) est amovible.

3. Le dispositif de commande de l'une ou de l'autre revendication précédente, dans lequel le contrôleur de guide comprend un mécanisme de pilotage (29, 30, 36, 38) qui est connecté au guide (24) afin de déplacer automatiquement le guide le long d'un premier rail (26), cas dans lequel le mécanisme de pilotage comprend le dispositif de positionnement de guide (36).

4. Le dispositif, selon l'une quelconque des revendications précédentes, dans lequel le dispositif de serrage maintient le deuxième rail de guidage (32, 40) dans un plan parallèle par rapport au premier rail (26) sans perturber la gamme opérationnelle de mouvement du guide (24) vers l'avant et vers l'arrière le long du premier rail (26).

5. Le dispositif, selon l'une quelconque des revendications précédentes, dans lequel le dispositif de serrage (42a, 42b) raccorde le deuxième rail (32, 40) directement au premier rail (26).

6. Le dispositif, selon l'une quelconque des revendications précédentes, dans lequel le dispositif de serrage possède au moins deux pinces (42a, 42b) conçues pour être fixées sur les extrémités opposées du premier rail (26).

7. Le dispositif, selon l'une quelconque des revendications précédentes, dans lequel le dispositif de serrage s'étend diagonalement vers le bas à partir du premier rail.

8. Le dispositif, selon l'une quelconque des revendications précédentes, dans lequel le deuxième rail (32, 40) se présente sous la forme d'un tube rectangulaire ayant une section en U linéaire.

9. Le dispositif, selon l'une quelconque des revendications précédentes, dans lequel le deuxième rail (32, 40) possède un côté supérieur, le dispositif de serrage étant raccordé de façon rigide au côté supérieur du deuxième rail.

10. Le dispositif, selon l'une quelconque des revendications précédentes, dans lequel le mécanisme de pilotage comporte un ordinateur et un clavier pour introduire des informations dans l'ordinateur afin de déterminer la dimension du bois destiné à être coupé sur la scie circulaire à table.

11. Le dispositif de la revendication 10, dans lequel le mécanisme de pilotage possède un processeur (29) qui détermine l'emplacement où le guide doit se rendre, sur la base des informations qui ont été introduites par l'intermédiaire du clavier.

12. Le dispositif de la revendication 11, dans lequel le processeur est capable de mémoriser une ou plusieurs listes de coupe et/ou est capable d'optimaliser un sous-programme de coupe sur la base d'une liste de coupe souhaitée ayant été introduite et sur la base des informations concernant les matières premières disponibles.

13. Le dispositif de la revendication 11 ou de la revendication 12, dans lequel le processeur est capable de mémoriser des longueurs de coupe communes et d'exécuter le mouvement du guide jusqu'à une position préprogrammée en réaction au contact manuel d'une seule touche sur le clavier.

14. Scie circulaire à table (20) comprenant un dispositif de commande de guide, selon l'une quelconque des revendications précédentes.
